# EUROPEAN PATENT APPLICATION

(11) **EP 3 491 935 A1**
(43) Date of publication of application: **05.06.2019**
(21) Application number: 18206201.8
(22) Date of filing: 14.11.2018
(51) Int. Cl.: A23L 5/10, A23L 3/10

(54) **METHOD FOR PREPARING FOOD**

(30) Priority: 29.11.2017 US 201715826363
(71) Applicant: IXON Food Technology Limited, Shatin, N.T. (HK)
(72) Inventor: CHEUNG, Man Ho, Shatin, N.T. (HK); HO, Yiu Kuen, Shatin, N.T. (HK)
(74) Representative: Hermann, Felix

(57) **Abstract**

A method for preparing food having at least a solid food component. The method comprises, during a high-temperature, short-time stage ("HTST stage"), cooking a surface of the solid food component at a temperature ("HTST temperature") of greater than 140 °C. The method further comprises, during a low-temperature, long-time stage ("LTLT stage"), cooking the solid food component at a temperature ("LTLT temperature") of between 40 and 100 °C. The method also comprises placing the food into packaging to form a sterile food package containing the food.

## Description

### FIELD OF THE INVENTION

The invention relates to methods for preparing food, particularly methods for preparing packaged food. The present invention is described herein primarily in relation to, but is not limited to, methods for preparing packaged solid foods or foods including solid and liquid food components.

### BACKGROUND OF THE INVENTION

The thermodynamics, protein chemistry, and microbiological risks of sous vide food having various food ingredients, including, but not limited to, pork, beef, chicken, fish, and edible bird nests have been examined. It has been found that compared to traditional cooking, sous vide cooking helped retain the nutritional quality and taste of food ingredients by preventing protein denaturation and the loss of soluble proteins.

However, the low cooking temperatures of sous vide cooking can only reduce food microorganisms (e.g. bacteria, fungi, and spores) by at most two logs, even when the cooking time was extended to 24 hours. This level of microbial reduction was sufficient for immediate consumption but not enough to achieve pasteurization or sterilization. If sous vide food was left at room temperature for an extended period of time, pathogenic microorganisms such as *Aspergillus flavus, Bacillus cereus, Campylobacter, Clostridium botulinum, Clostridium perfringens, Escherichia coli, Listeria monocytogenes, Staphylococcus aureus, Salmonella, Shigella, Vibrio vulnificus,* and *Vibrio parahaemolyticus* could thrive and cause food poisoning. Among these pathogenic microorganisms, *C. botulinum* is of most concern due to its resistance to heat, as well as ability to form spores and release deadly neurotoxins.

In theory, raising the temperature to 121 °C could help eliminate these pathogenic microorganisms, but this would result in protein denaturation and the loss of soluble proteins.

It is an object of the present invention to overcome or ameliorate at least one of the disadvantages of the prior art, or to provide a useful alternative.

### SUMMARY OF THE INVENTION

The present invention provides, in a first aspect, a method for preparing food having at least a solid food component, the method comprising: during a high-temperature, short-time stage ("HTST stage"), cooking a surface of the solid food component at a temperature ("HTST temperature") of greater than 140 °C; during a low-temperature, long-time stage ("LTLT stage"), cooking the solid food component at a temperature ("LTLT temperature") of between 40 and 100 °C; and placing the food into packaging to form a sterile food package containing the food.

In one embodiment, the surface of the solid food component surrounds a core of the solid food component, and the surface is cooked to seal the core from an environment external to the solid food component.

In one embodiment, the surface extends to a depth of 1 mm from an outer surface portion of the solid food component.

In one embodiment, the HTST temperature is greater than 160 °C. In one embodiment, the HTST temperature is less than 240 °C. In one embodiment, the HTST temperature is 181 °C.

In one embodiment, the surface is cooked at the HTST temperature for a time period ("HTST time") of less than 20 minutes. In one embodiment, the HTST time is less than 180 seconds. In one embodiment, the HTST time is at least 0.00018 seconds. In one embodiment, the HTST time is between 0.1 and 120 seconds. In one embodiment, the HTST time is between 10 and 120 seconds.

In one embodiment, the LTLT temperature is between 60 and 80 °C.

In one embodiment, the solid food component is cooked at the LTLT temperature for a time period ("LTLT time") of between 30 minutes and 48 hours. In one embodiment, the LTLT time is between 1 and 24 hours.

In one embodiment, the LTLT stage occurs before the HTST stage.

In one embodiment, the HTST stage occurs before the LTLT stage.

In one embodiment, the solid food component is placed into the packaging and undergoes the HTST stage whilst in the packaging.

In one embodiment, the solid food component undergoes the HTST stage before being placed into the packaging.

In one embodiment, the solid food component is frozen, during a pre-treatment stage, before undergoing the HTST stage.

In one embodiment, the food has a liquid food component, and the method comprises placing the liquid food component into the packaging before pasteurizing or sterilizing the liquid food component whilst in the packaging.

In one embodiment, the food has a liquid food component, and the method comprises pasteurizing or sterilizing the liquid food component before placing the liquid food component into the packaging. In one embodiment, the pasteurized or sterilized liquid food component is hot-filled at a temperature of between 80 and 95 °C into the packaging.

In one embodiment, the liquid food component is pasteurized or sterilized at a temperature of 121 °C for between 20 and 60 minutes.

In one embodiment, the LTLT stage occurs before or after the pasteurized or sterilized liquid food component is placed into the sterile food package.

In one embodiment, the packaging is sterilized at a temperature of 121 °C for 15 minutes before any of the food is placed into the packaging.

In one embodiment, the sterile food package is hermetically sealed. In one embodiment, the sterile food package is hermetically sealed in a modified atmosphere. In one embodiment, the sterile food package is hermetically sealed in a nitrogen atmosphere. In one embodiment, the sterile food package is hermetically sealed under vacuum.

In a second aspect, the present invention provides a sterile food package prepared with a method as described above.

In a third aspect, the present invention provides food prepared with a method as described above.

In a fourth aspect, the present invention provides a sterile food package comprising:
food with a solid food component, the solid food component having a surface surrounding a core; sterile packaging; the surface cooked to a temperature of greater than 140 °C; and the core cooked only to a temperature of between 40 and 100 °C.

Throughout this specification, including the claims, the words "comprise", "comprising", and other like terms are to be construed in an inclusive sense, that is, in the sense of "including, but not limited to", and not in an exclusive or exhaustive sense, unless explicitly stated otherwise or the context clearly requires otherwise.

### BRIEF DESCRIPTION OF THE FIGURES

Preferred embodiments in accordance with the best mode of the present invention will now be described, by way of example only, with reference to the accompanying figures, in which the same reference numerals refer to like parts throughout the figures unless otherwise specified, and in which:
**Figs. 1 to 4** are diagrams showing steps of a method in accordance with an embodiment of the present invention;
**Fig. 5** is a graph of a temperature profile of a solid food component prepared using a method in accordance with the embodiment of Figs. 1 to 4;
**Fig. 6** is a flowchart showing steps of a method in accordance with the embodiment of Figs. 1 to 4;
**Figs. 7 to 10** are diagrams showing steps of a method in accordance with another embodiment of the present invention;
**Fig. 11** is a graph of a temperature profile of a solid food component prepared using a method in accordance with the embodiment of Figs. 7 to 10; and
**Fig. 12** is a flowchart showing steps of a method in accordance with the embodiment of Figs. 7 to 10.

### DETAILED DESCRIPTION OF PREFERRED EMBODIMENTS OF THE INVENTION

Referring to the figures, there is provided a method for preparing food 1 having at least a solid food component 2. The method comprises, during a high-temperature, short-time stage ("HTST stage"), cooking a surface 3 of the solid food component 2 at a temperature ("HTST temperature") of greater than 140 °C. The method further comprises, during a low-temperature, long-time stage ("LTLT stage"), cooking the solid food component 2 at a temperature ("LTLT temperature") of between 40 and 100 °C. The method also comprises placing the food 1 into packaging 4 to form a sterile food package 5 containing the food.

The surface 3 of the solid food component 2 surrounds a core 7 of the solid food component 2, and the surface 3 is cooked to seal the core 7 from an environment external to the solid food component 2. The HTST stage ensures that the core 7 is adequately sealed. The surface 3 typically extends to a depth of 1 mm from an outer surface portion 8 of the solid food component 2. It has been found that a depth of 1 mm in practice forms a sufficient seal to seal the core 7 from the external environment taking into account the variable profile of the outer surface portion 8.

The HTST temperature is typically greater than 160 °C. The HTST temperature is also typically less than 240 °C. In one embodiment, the HTST temperature is 181 °C.

Generally, the surface is cooked at the HTST temperature for a time period ("HTST time") of less than 20 minutes. Typically, the HTST time is less than 180 seconds. The HTST time is at least 0.00018 seconds. Cooking the surface 3 at 181 °C for 0.00018 seconds achieves a 12-log reduction in C. *botulinum* whose D value at 121 °C is 15 seconds and Z value is 10 °C. The D value is the time required to kill 90% or 1-log of microorganisms. The Z value is the number of °C that must be raised in order to achieve a 1-log reduction in the D value. In usual practice, the HTST time is between 0.1 and 120 seconds. Preferably, the HTST time is between 10 and 120 seconds.

The LTLT temperature is typically between 60 and 80 °C. Generally, the solid food component 2 is cooked at the LTLT temperature for a time period ("LTLT time") of between 30 minutes and 48 hours. Typically, the LTLT time is between 1 and 24 hours.

In one embodiment, the LTLT stage occurs before the HTST stage. Alternatively, the HTST stage can occur before the LTLT stage.

The solid food component 2 can undergo the HTST stage before being placed into the packaging 4. Alternatively, the solid food component 2 can be placed into the packaging 4 and undergo the HTST stage whilst in the packaging 4. Typically, the solid food component 2 is placed into the packaging 4 to form the sterile food package 5 directly after the HTST stage, or during the HTST stage, but before the LTLT stage in embodiments where the LTLT stage occurs after the HTST stage, in order to maximize the sterility of the solid food component 2 after being subjected to the HTST stage.

The packaging 4 can be sterilized at a temperature of 121 °C for 15 minutes before any of the food 1 is placed into the sterile packaging 4. For example, the packaging 4 can be sterilized in this way where the solid food component 2 undergoes the HTST stage before being placed into the packaging 4. This sterilization of the packaging 4 is typically carried out in an autoclave.

The sterile food package 5 is hermetically sealed. This is can be done after both the LTLT and HTST stages, or it can be done after the HTST stage but before the LTLT stage where the LTLT stage occurs after the HTST stage. The sterile food package 5 can be hermetically sealed in a modified atmosphere. For example, the sterile food package 5 is hermetically sealed in a nitrogen atmosphere. The sterile food package 5 can also be hermetically sealed under vacuum.

The solid food component 2 can be frozen, during a pre-treatment stage, before undergoing the HTST stage. It has been found that freezing the solid food component 2 before being subjected to the HTST stage results in an improved temperature profile across the depth of the solid food component 2. In particular, the temperature of the core 7 is consistent even close to the surface 3. Where the LTLT stage occurs after the HTST stage, the core 7 is then also cooked more consistently during the LTLT stage. The solid food component 2 can also be frozen before undergoing the LTLT stage where the LTLT stage occurs before the HTST stage.

In embodiments where the food 1 has a liquid food component 6, the method further comprises pasteurizing or sterilizing the liquid food component 6 before placing the liquid food component into the packaging 4. The liquid food component 6 can be pasteurized or sterilized at a temperature of 121 °C for between 20 and 60 minutes. The pasteurized or sterilized liquid food component 6 is then hot-filled at a temperature of between 80 and 95 °C into the sterilized packaging 4. In this case, the solid food component 2 can be introduced into the sterilized packaging 4 after the liquid food component 6 is introduced into the sterilized packaging 4, and after having undergone the HTST stage, thereby forming the sterile food package 5 which can then undergo the LTLT stage if the LTLT stage had not already occurred before the HTST stage which is also possible. Alternatively, the solid food component 2 can already be inside the sterilized packaging 4 before the liquid food component 6 is introduced into the sterilized packaging 4. In this latter case, the solid food component 2 could have undergone the HTST stage whilst in the packaging 4, or before being placed into the packaging 4. Also in this latter case, the LTLT stage can occur before the HTST stage whilst in the packaging 4, or before being placed into the packaging 4, or alternatively, the LTLT stage can occur after the HTST stage whilst in the packaging 4, or before being placed into the packaging 4. Where the LTLT stage occurs after the HTST stage and whilst in the packaging 4, the LTLT stage can occur before or after the liquid food component 6 is introduced into the sterilized packaging 4.

Alternatively, the method further comprises placing the liquid food component 6 into the packaging 4 before pasteurizing or sterilizing the liquid food component 6 whilst in the packaging 4. The liquid food component 6 can be pasteurized or sterilized at a temperature of 121 °C for between 20 and 60 minutes. This provides the advantage that the liquid food component 6 can be pasteurized or sterilized in the packaging 4 at the same time as the packaging 4 itself is being sterilized. Typically, the solid food component 2, which has usually already undergone the HTST stage, is then introduced into the sterilized packaging 4 to form the sterile food package 5 which can then undergo the LTLT stage if the LTLT stage had not already occurred before the HTST stage which is also possible.

As can be appreciated from the above, the LTLT stage can occur before or after the pasteurized or sterilized liquid food component 6 is placed into the sterile food package 5.

The liquid food component 6 is typically a broth, paste, sauce, or soup. As such, the liquid food component 6 can actually include solid components such as vegetables, or particulate food such as chopped or sliced vegetables, including particulate meats such as small pieces of ham or bacon. The solid food component 2 is typically a bulk piece of food, and typically a protein, such as meat, fish or other seafood, or eggs with or without shell, or a root vegetable. In other words, the solid food component 2 is one where it is important to use a HTST stage to seal the core 7 and then use a LTLT stage to cook the solid food component 2 in order to minimize or avoid protein denaturation and the loss of soluble proteins.

Throughout this specification, the reference to food encompasses all substances that are ingestible by people. This includes traditional Chinese medicinal products. Such products also include solid components that would benefit from methods of the present invention where the solid components undergo a HTST stage and a LTLT stage before or after the HTST stage. For example, it would be beneficial to avoid or minimize protein denaturation and loss of soluble proteins in these solid components and therefore the methods of the present invention would be advantageous.

In another aspect of the invention, there is also provided a sterile food package 5 prepared with a method as described above.

In yet another aspect of the invention, there is also provided food prepared with a method as described above.

In a further aspect of the invention, there is provided a sterile food package 5 comprising food 1 with a solid food component 2. The solid food component 2 has a surface 3 surrounding a core 7. The sterile food package 5 also comprises sterile packaging 4. The surface 3 is cooked to a temperature of greater than 140 °C, and the core 7 is cooked only to a temperature of between 40 and 100 °C.

The surface 3 extends from an outer surface portion 8 of the solid food component 2. Cooking the outer surface portion 8 at a temperature of greater than 140 °C, and preferably greater than 160 °C kills all bacteria, fungi, spores, and other pathogens on the outer surface portion 8 whilst leaving the core 7 intact and sterile. Typically, this temperature of greater than 140 °C applies to a depth of about 1 mm below the outer surface portion 8 of the solid food component 2. This means that the bulk of the solid food component 2 which forms the core 7 is not subjected to high temperatures. This minimizes or avoids protein denaturation and the loss of soluble proteins. As a result, the solid food component 2 has a texture, flavor, moistness, and nutritional values that are superior to those prepared with prior methods, such as canned and retort food products.

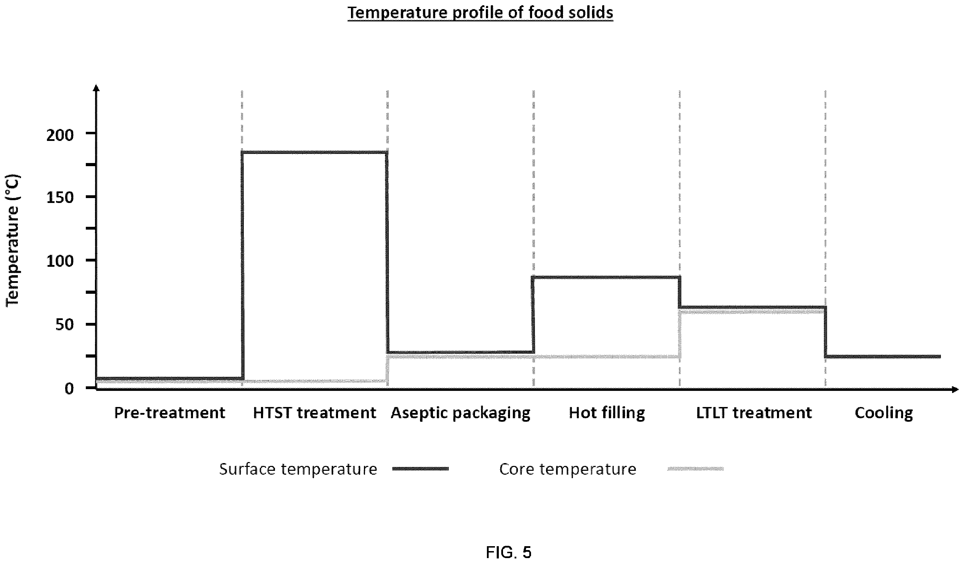

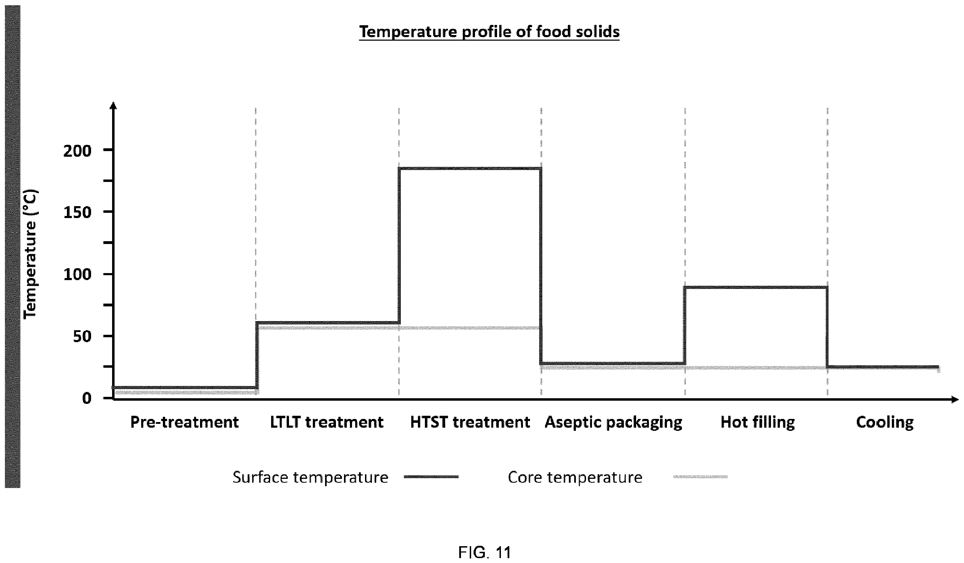

Broadly, with the present invention, only the liquid food component 6 and the surface 3 of the solid food component 2 are subjected to temperatures greater than 100 °C. The interior of the solid food component 2, i.e. the core 7, is kept below 100 °C throughout the methods of the present invention. In particular, the core 7 is only cooked at a temperature of between 40 and 100 °C, and usually between 60 and 80 °C. Typically, the liquid food component 6 is pasteurized or sterilized at a temperature of 121 °C, and then hot-filled at a temperature of between 80 and 95 °C into the sterilized packaging 4 with the solid food component 2 to form the sterile food package 5. Also, the sterilized packaging 4 is typically sterilized at a temperature of 121 °C for 15 minutes before the food 1 is placed into the sterilized packaging 4. To better illustrate this, Figs. 5 and 11 are temperature profiles of the solid food component 2 during two embodiments respectively of the present invention.

The present invention advantageously allows the sterilization of sous vide food without compromising its nutritional quality and taste. In accordance with the present invention as described above, the sous vide food can be separated into three components: solid food components 2 (e.g. pork chop, beef sirloin, root vegetables), liquid food components 6 (e.g. tomato paste, chicken soup, curry sauce), and packaging 4 (e.g. polyethylene pouch, plastic tray, glass jar, aluminium can). As described above in accordance with the present invention, different sterilization methods are applied to the different components.

More specifically, the different sterilization methods are: a high-temperature, short-time ("HTST") stage (e.g. searing at 181 °C for 10 seconds) is used to kill all bacteria, fungi, and spores on the surface 3 of solid food components 2 whose interior 7 is intact and sterile; a medium-temperature, medium-time ("MTMT") "retort" treatment (e.g. 121 °C for 20 minutes) is used to eliminate all bacteria, fungi, and spores in liquid food components 6, with or without particulates, and packaging 4; and a low-temperature, long-time ("LTLT") stage, or "sous vide" treatment (e.g. 60 °C for 2 hours) is used to inactivate enzymes, viruses, and parasites that may or may not be present in solid food components 2.

The applicants have named a specific embodiment of the present invention as "advanced sous-vide aseptic packaging (ASAP)". ASAP comprises the following steps:
(i) Sear the surface 3 of solid food components 2 (i.e. raise the surface temperature) through deep-frying, frying, flaming, grilling, roasting, scorching, or superheated steam at 181 °C for 10 to 120 seconds depending on the temperature, morphology, and type of solid food components 2. In theory, searing at 181 °C for 0.00018 seconds would achieve a 12-log reduction in C. *botulinum* whose D value at 121 °C is 15 seconds and Z value is 10 °C, but for safety reasons, searing at 181 °C for at least 10 seconds is recommended.
(ii) Pasteurize (if pH < 4.5) or sterilize liquid food components 6 (if pH > 4.6) inside an autoclave at 121 °C for 20 to 60 minutes depending on the size, volume, and viscosity of the liquid food components 6.
(iii) Sterilize packaging 4 inside an autoclave at 121 °C for 15 minutes.
(iv) Place solid food components 2 inside sterile packaging 4 under sterile conditions (e.g. inside a clean bench of ISO class 5 or below).
(v) Hot-fill sterile liquid food components 6 at 80 to 95 °C depending on pH of the liquid food components into the packaging 4 containing the solid food components 2.
(vi) Hermetically seal the packaging 4 containing the solid food components 2 and the liquid food components 6 with or without a modified atmosphere (e.g. nitrogen).
(vii) Hold the temperature of packaging 4 containing the solid food components 2 and the liquid food components 6 at 60 to 80 °C using a digital water bath, incubator, or sous-vide oven for 1 to 24 hours depending on the size, load, and type of solid food components 2.

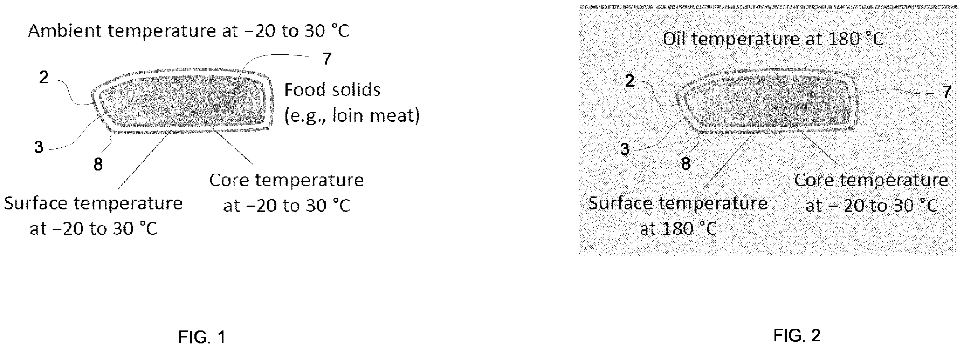

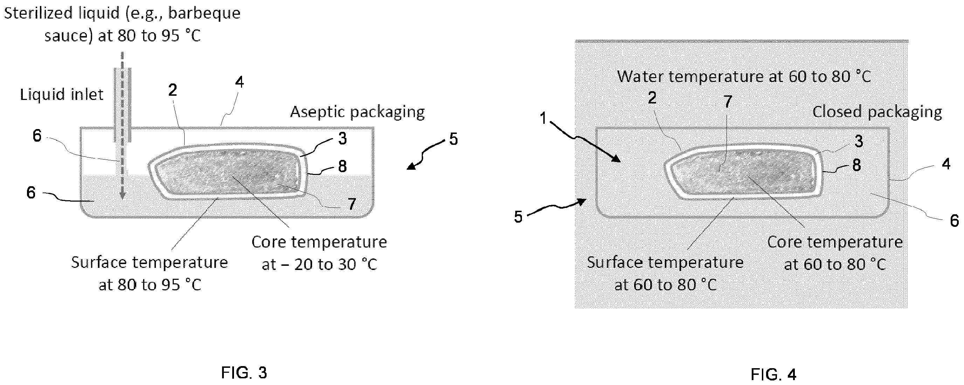

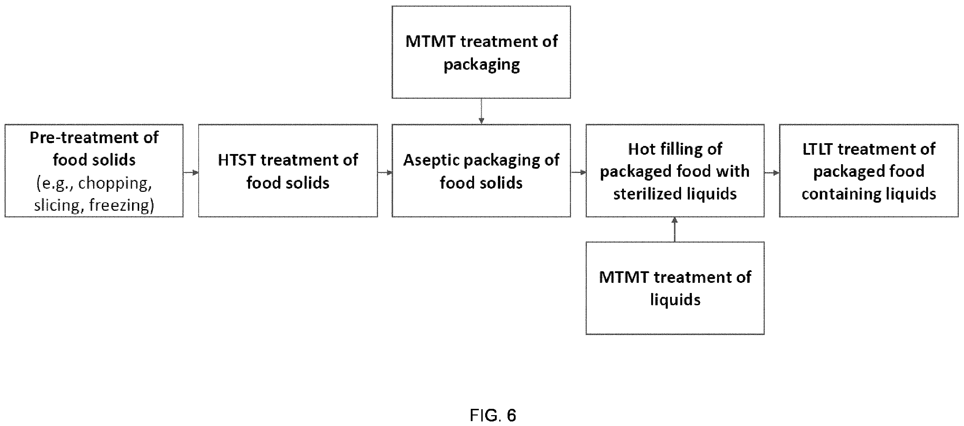

The above ASAP embodiment is generally represented in Figs. 1 to 4. Fig. 1 shows the solid food component before undergoing the HTST stage which is shown in Fig. 2. Fig. 3 shows the hot-filling of the liquid food component 6 into the packaging 4. Fig. 4 shows the LTLT stage. In the embodiment shown, the LTLT stage is applied to the sterile food package 5 after the sterile food package 5 is formed. The corresponding temperature profile of the solid food component 2 during the embodiment described above is generally shown in Fig. 5. Fig. 6 is a flowchart that generally represents this embodiment.

Another version of this ASAP embodiment comprises the following steps:
(i) Hold the solid food components 2 at 60 to 80 °C using a digital water bath, oil bath, incubator, or sous-vide oven for 1 to 24 hours depending on the size, load, and type of solid food components 2.
(ii) Sear the surface 3 of solid food components 2 (i.e. raise the surface temperature) through deep-frying, frying, flaming, grilling, roasting, scorching, or superheated steam at 181 °C for 10 to 120 seconds depending on the temperature, morphology, and type of solid food components 2. In theory, searing at 181 °C for 0.00018 seconds would achieve a 12-log reduction in C. *botulinum* whose D value at 121 °C is 15 seconds and Z value is 10 °C, but for safety reasons, searing at 181 °C for at least 10 seconds is recommended.
(iii) Pasteurize (if pH < 4.5) or sterilize liquid food components 6 (if pH > 4.6) inside an autoclave at 121 °C for 20 to 60 minutes depending on the size, volume, and viscosity of the liquid food components 6.
(iv) Sterilize packaging 4 inside an autoclave at 121 °C for 15 minutes or using a disinfectant such as hydrogen peroxide.
(v) Place solid food components 2 inside sterile packaging 4 under sterile conditions (e.g. inside a clean bench of ISO class 5 or below).
(vi) Hot-fill sterile liquid food components 6 at 80 to 95 °C depending on pH of the liquid food components into the packaging 4 containing the solid food components 2.
(vii) Hermetically seal the packaging 4 containing the solid food components 2 and the liquid food components 6 with or without a modified atmosphere (e.g. nitrogen).

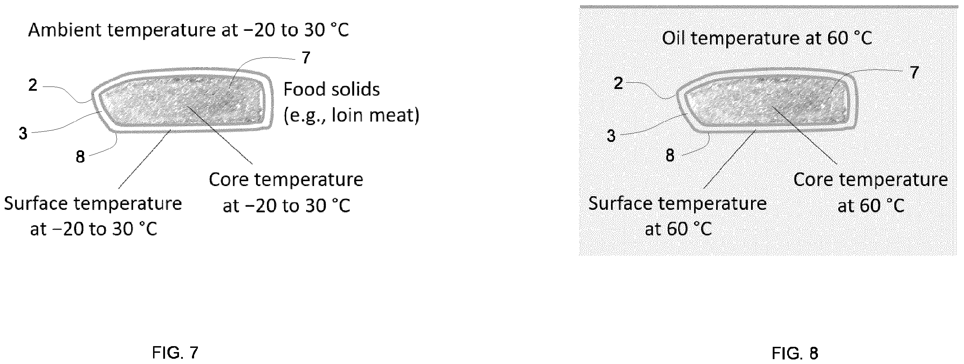

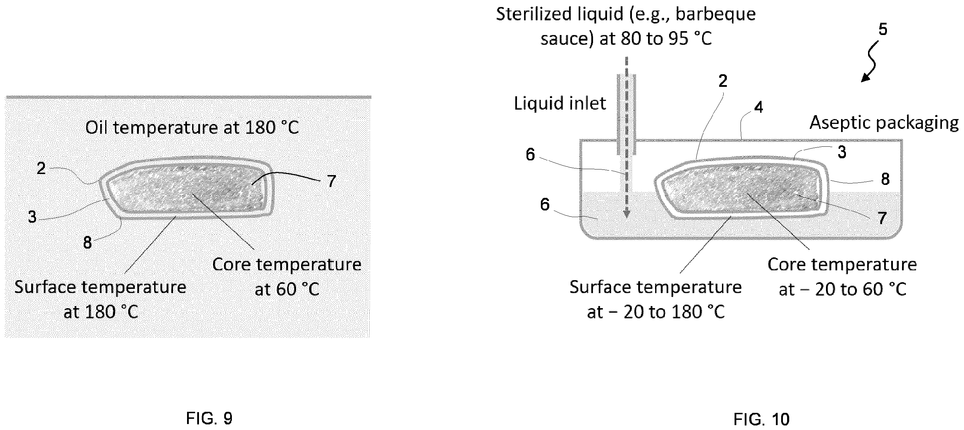

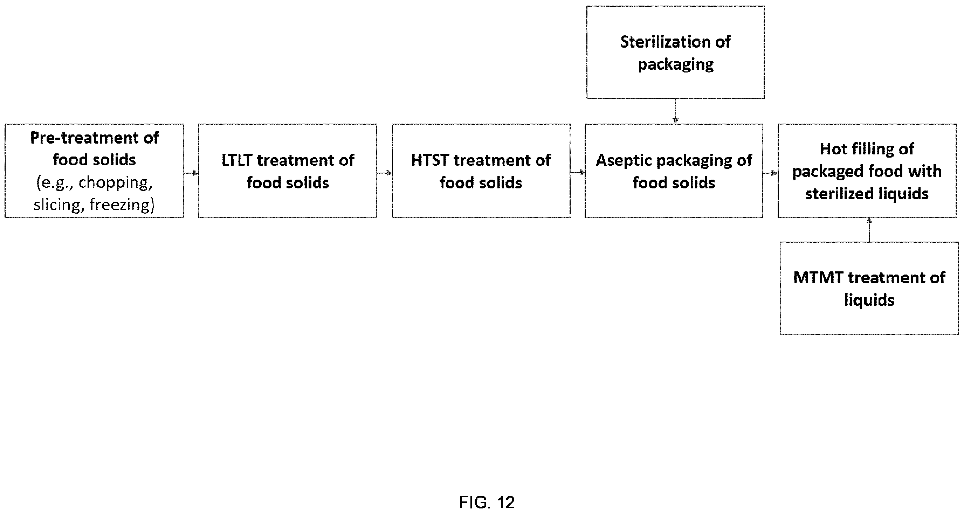

The above version of the ASAP embodiment is generally represented in Figs. 7 to 10. Fig. 7 shows the solid food component before undergoing the LTLT stage which is shown in Fig. 8. Fig. 9 shows the HTST stage. Fig. 10 shows the hot-filling of the liquid food component 6 into the packaging 4. In the embodiment shown, the LTLT state is applied before the HTST stage and the sterile food package 5 is formed after the HTST stage. The corresponding temperature profile of the solid food component 2 during the embodiment described above is generally shown in Fig. 11. Fig. 12 is a flowchart that generally represents this embodiment.

ASAP can be used to:
(i) Prolong the shelf-life of foods such as meat, seafood, eggs with or without shell, and root vegetables, including, but not limited to, beef, pork, lamb, chicken, fish, squid, lobster, scallop, abalone, sea cucumber, fish maw, shark fin, potato, sweet potato, yam, taro, lotus root, carrot, radish, water chestnut, and burdock root.
(ii) Manufacture shelf-stable food products that will not spoil even when stored at room temperature for up to 2 years, and even longer if the sterile food package is not compromised.
(iii) Improve the texture, flavour, moistness, and nutritional values of processed food.
(iv) Manufacture ready-to-eat meals that can be eaten with or without warming/reheating.
(v) Manufacture traditional Chinese medicinal products such as ginseng, Chinese bellflower roots, and loquats.
(vi) Manufacture natural health food products such as edible bird's nest with enhanced levels of biologically active proteins/peptides or temperature-sensitive phytochemicals.
(vii) Manufacture low-carbon food products that have minimal food loss and waste, use little water and energy, and require no refrigeration during transportation.
(viii) Manufacture intermediate goods or semi-finished food products for use in hotels, restaurants, eateries, and food factories.
(ix) Manufacture sterile food products for aviation, aerospace, disaster relief, hospital, and military applications.

Meat, seafood, eggs with or without shell, and root vegetables are perishable foods that spoil easily. ASAP helps prolong the shelf-life of foods such as meat, seafood, eggs with or without shell, and root vegetables for up to 2 years, and even longer if the sterile food package is not compromised. There are many differences between ASAP and conventional food processing/preservation methods. For example:
(i) Unlike frozen or chilled food products, ASAP food products do not require machinery or low-temperature for storage.
(ii) Unlike traditional sous vide food products, ASAP food products are sterile and shelf-stable for up to 2 years, and even longer if the sterile food package is not compromised.
(iii) Unlike salting, curing, pickling, and lactic acid fermentation, ASAP does not require the addition of salt, sugar, acids, nitrates, preservatives, enzymes, or lactic acid bacteria in food products.
(iv) Unlike drying and freeze drying, ASAP does not result in water loss or mass change in food products.
(v) Unlike canned or retort food products, the interior of food solids in ASAP food products is not subjected to high temperatures. Only the surface of solid food components, liquid food components, and packaging are subjected to high temperatures. As a result, ASAP food products have texture, flavour, moistness, and nutritional values that are superior to canned and retort food products.
(vi) Unlike hot filling or aseptic processing which are designed for use on liquid food products (e.g. milk, juice, wine, yoghurt, cream, tomato paste) or liquids with small particulates (e.g. creamed corn, seafood chowder, ice cream), ASAP is designed for use on solids (e.g., pork chops, roast beef) and solid-in-liquid food products (e.g. curry chicken, beef stew).

ASAP enables the long-term preservation of foods such as meat, seafood, eggs with or without shell, and root vegetables and makes use of the advantages of a great number of cooking and food preservation methods. More specifically, ASAP can utilize retort sterilization, hot-filling, and aseptic packaging to kill all bacteria, fungi, and spores in the packaging and the liquid food components of food products, a high-temperature searing method to sterilize the solid food components of food products, and a low-temperature sous vide method to inactivate all enzymes, viruses, and parasites that may or may not be present in food products.

In canning and retort sterilization, solid and solid-in-liquid food products are hermetically sealed in packaging, and then sterilized inside an autoclave using an MTMT retort method. The process does not require a sterile environment. In ASAP, food products are sterilized using both HTST and MTMT methods, and then hermetically sealed in sterile packaging under sterile conditions. In addition, canned and retort food products, particularly meat and seafood products, are typically dry, coarse, and mushy. In comparison, ASAP products have texture, flavour, moistness, and nutritional values that rival freshly made products.

In aseptic packaging, liquid food products and liquids with small particulates are sterilized and then hermetically sealed in sterile packaging under sterile conditions. The technology requires food products to be free-flowing so they can be injected into the packaging. There is no further treatment once the packaging is hermetically sealed. In ASAP, solids and solid-in-liquid food products are sterilized and then hermetically sealed in sterile packaging under sterile conditions. Only the liquid component of food products need to be free-flowing. Once the packaging is hermetically sealed, food products are subjected to an LTLT treatment.

In hot-filling, liquid food products are pasteurized and then hermetically sealed in sterile packaging under sterile conditions. The technology only works on acidic liquid food products whose pH < 4.5. In comparison, ASAP can be applied on solids and solid-in-liquid products, and the liquid component need not be acidic.

A basic practical test that can be carried out to differentiate whether a food item was prepared with prior canning or retort sterilization methods, or by contrast, with methods of the present invention is to subject the final food item to a temperature of 121 °C for 40 minutes during the test. There will not be much difference between the food item before and after the test where the food item was prepared with prior canned or retort methods since the food item was treated with the same conditions during manufacturing. However, there will be significant differences in quality, taste, color, protein texture, moisture, cell structure, and nutritional values in the food item before and after the test where the food item was prepared with methods of the present invention.

### Additional Examples

Additional Example 1 is a method for preparing food having at least a solid food component, the method comprising during a high-temperature, short-time stage ("HTST stage"), cooking a surface of the solid food component at a temperature ("HTST temperature") of greater than 140 °C; placing the food into packaging to form a sterile food package containing the food; and during a low-temperature, long-time stage ("LTLT stage"), cooking the sterile food package at a temperature ("LTLT temperature") of between 40 and 100 °C.
Additional Example 2 is a method according to Additional Example 1 wherein the surface of the solid food component surrounds a core of the solid food component, and the surface is cooked to seal the core from an environment external to the solid food component.
Additional Example 3 is a method according to one of the Additional Examples mentioned before wherein the surface extends to a depth of 1 mm from an outer surface portion of the solid food component.
Additional Example 4 is a method according to one of the Additional Examples mentioned before wherein the HTST temperature is greater than 160 °C.
Additional Example 5 is a method according to Additional Example 4 wherein the HTST temperature is 181 °C.
Additional Example 6 is a method according to one of the Additional Examples mentioned before wherein the surface is cooked at the HTST temperature for a time period ("HTST time") of less than 20 minutes.
Additional Example 7 is a method according to claim 6 wherein the HTST time is at least 0.00018 seconds.
Additional Example 8 is a method according to Additional Example 7 wherein the HTST time is between 10 and 120 seconds.
Additional Example 9 is a method according to one of the Additional Examples mentioned before wherein the LTLT temperature is between 60 and 80 °C.
Additional Example 10 is a method according to one of the Additional Examples mentioned before wherein the sterile food package is cooked at the LTLT temperature for a time period ("LTLT time") of between 30 minutes and 48 hours.
Additional Example 11 is a method according to one of the Additional Examples mentioned before wherein the solid food component is placed into the packaging and undergoes the HTST stage whilst in the packaging.
Additional Example 12 is a method according to one of the Additional Examples mentioned before wherein the solid food component undergoes the HTST stage before being placed into the packaging.
Additional Example 13 is a method according to one of the Additional Examples mentioned before wherein the food has a liquid food component, and the method comprises placing the liquid food component into the packaging before pasteurizing or sterilizing the liquid food component whilst in the packaging.
Additional Example 14 is a method according to one of the Additional Examples mentioned before wherein the food has a liquid food component, and the method comprises pasteurizing or sterilizing the liquid food component before placing the liquid food component into the packaging.
Additional Example 15 is a method according to one of the Additional Examples mentioned before4 wherein the pasteurized or sterilized liquid food component is hot-filled at a temperature of between 80 and 95 °C into the packaging.
Additional Example 16 is a method according to one of the Additional Examples mentioned before4 wherein the liquid food component is pasteurized or sterilized at a temperature of 121 °C for between 20 and 60 minutes.
Additional Example 17 is a method according to one of the Additional Examples mentioned before wherein the packaging is sterilized at a temperature of 121 °C for 15 minutes before any of the food is placed into the packaging.
Additional Example 18 is a method according to one of the Additional Examples mentioned before wherein the sterile food package is hermetically sealed.
Additional Example 19 is food prepared with a method according to one of the Additional Examples mentioned before.
Additional Example 20 is a sterile food package comprising: food with a solid food component, the solid food component having a surface surrounding a core; sterile packaging; the surface cooked to a temperature of greater than 140 °C; and the core cooked only to a temperature of between 40 and 100 °C after the food is placed into the sterile packaging.

It is appreciated that the aforesaid embodiments are only exemplary embodiments adopted to describe the principles of the present invention, and the present invention is not merely limited thereto. Various variants and modifications can be made by those of ordinary skill in the art without departing from the spirit and essence of the present invention, and these variants and modifications are also covered within the scope of the present invention. Accordingly, although the invention has been described with reference to specific examples, it is appreciated by those skilled in the art that the invention can be embodied in many other forms. It is also appreciated by those skilled in the art that the features of the various examples described can be combined in other combinations.

### REFERENCES

1. Thermal processing of food, p 257, Smith, P. G., Introduction to food process engineering, Springer, New York, USA (2011).
2. Tomoda, H., Kadowaki, N., Tomoda, H., Moriwaki, M., and Kadowaki, S., Retort sterilization device, heating device, heat sterilization method and heat treatment method. US 9125428 B2, 8 December 2015.
3. Tago, Y., Takai, T., and Umegae, K., Sterilizing method and sterilizing apparatus for retorted products, US 8262987 B2, 11 September 2012.
4. Okamoto, H., and Sengoku, K., Method for sealing retort container, US 5157901 A, 27 October 1992.
5. Wijts, C. C., Batch sterilizing system, US 5059392 A, 22 October 1991.
6. Hess, W. R., and Jensen, L. B., Canning meat products, US 2362441 A, 14 March 1994.
7. Griffith, C. L., and Komarik, S. L., Canning meat and meat products, US 2331467 A, 12 October 1943.
8. Komarik, S. L., Process for canning meat, US 2224398 A, 10 December 1940.
9. Sahlberg, C. A., Method of canning meats, US 1632454 A, 14 June 1927.
10. Jarund, H. S. V., and Rausing, A. R., Apparatus for manufacturing sterile packages starting from a flattened tube having a sterilized inner surface, US 3431700 A, 11 March 1969.
11. Rausing, A. R., Method of packaging sterile liquids, US 3486295 A, 30 December 1969.
12. Rausing, A. R., Method of packaging sterile filling material under aseptic conditions, US 3466841, 16 September 1969.
13. Peisach, A., and Mendez, H., Container for hot fill food packaging applications, US 20050184073 A1, 25 August 2005.
14. Andersson, B., Method in hot filling of foods in a packaging container, as well as an apparatus therefor, US 7784248 B2, 31 August 2010.
15. Stegmaier, B., Hot fill and quick chill process for premium quality juice, US 20070184157 A1, 9 August 2007.
16. Morandotti, A., and Bonassi, L., Steam oven for "sous-vide" cooking and method for using such oven, US 20110217439 A1, 8 September 2011.
17. Ferreira, J. G. M. V. P., and Vieira, A. C. V., Sous vide cooking, US 20150289544 A1, 15 October 2015.
18. Wu, J., Sous-vide cooking chamber, US 20150027319 A1, 29 January 2015.

## Claims

1. A method for preparing food having at least a solid food component, the method comprising:
during a high-temperature, short-time stage ("HTST stage"), cooking a surface of the solid food component at a temperature ("HTST temperature") of greater than 140 °C;
during a low-temperature, long-time stage ("LTLT stage"), cooking the solid food component at a temperature ("LTLT temperature") of between 40 and 100 °C; and
placing the food into packaging to form a sterile food package containing the food.

2. A method according to claim 1 wherein the surface of the solid food component surrounds a core of the solid food component, and the surface is cooked to seal the core from an environment external to the solid food component.

3. A method according to claim 1 or 2 wherein the surface extends to a depth of 1 mm from an outer surface portion of the solid food component.

4. A method according to one of claims 1 to 3 wherein the HTST temperature is greater than 160 °C, preferably 181 °C.

5. A method according to one of claims 1 to 4 wherein the surface is cooked at the HTST temperature for a time period ("HTST time") of less than 20 minutes.

6. A method according to claim 5 wherein the HTST time is at least 0.00018 seconds, preferably, between 10 and 120 seconds.

7. A method according to one of claims 1 to 6 wherein the LTLT temperature is between 60 and 80 °C.

8. A method according to one of claims 1 to 7 wherein the solid food component is cooked at the LTLT temperature for a time period ("LTLT time") of between 30 minutes and 48 hours.

9. A method according to one of claims 1 to 8 wherein the LTLT stage occurs before the HTST stage.

10. A method according to one of claims 1 to 8 wherein the HTST stage occurs before the LTLT stage.

11. A method according to one of claims 1 to 10 wherein the solid food component undergoes the HTST stage before being placed into the packaging.

12. A method according to one of claims 1 to 11 wherein the food has a liquid food component, and the method comprises pasteurizing or sterilizing the liquid food component before placing the liquid food component into the packaging.

13. A method according to claim 12 wherein the pasteurized or sterilized liquid food component is hot-filled at a temperature of between 80 and 95 °C into the packaging, wherein the LTLT stage occurs before or after the pasteurized or sterilized liquid food component is placed into the sterile food package; and wherein, preferably, the packaging is sterilized at a temperature of 121 °C for 15 minutes before any of the food is placed into the packaging.

14. Food prepared with a method according to one of claims 1 to 13.

15. A sterile food package comprising:
food with a solid food component, the solid food component having a surface surrounding a core;
sterile packaging;
the surface cooked to a temperature of greater than 140 °C; and
the core cooked only to a temperature of between 40 and 100 °C.
